# EUROPÄISCHE PATENTSCHRIFT

(11) **EP 0 627 590 B1**
(45) Veröffentlichungstag und Bekanntmachung des Hinweises auf die Patenterteilung: **21.05.1997**
(21) Anmeldenummer: 94103825.9
(22) Anmeldetag: 11.03.1994
(51) Int. Cl.: F16L 21/06

(54) **Rohrverbindung**
Pipe coupling
Raccord de tuyaux

(30) Priorität: 29.05.1993 DE 9308116 U
(43) Veröffentlichungstag der Anmeldung: 07.12.1994
(73) Patentinhaber: Vahlbrauk, Karl Heinz, D-37581 Bad Gandersheim (DE)
(72) Erfinder: Vahlbrauk, Karl Heinz, D-37581 Bad Gandersheim (DE)
(74) Vertreter: Sobisch, Peter, Dipl.-Ing.

(56) Entgegenhaltungen:
- DE-U- 8 033 973
- DE-U- 8 904 526
- GB-A- 1 295 176

## Beschreibung

Die Erfindung bezieht sich auf eine Rohrverbindung entsprechend dem Oberbegriff des Anspruchs 1.

Steckbare Rohrverbindungen sind in mannigfacher Form bekannt. So zeigt beispielsweise das DE-GM 89 04 526.2 eine Rohrverbindung zwischen zwei Rohrenden, die endseitig muffenartig gleichermaßen aufgeweitet sind, wobei jede dieser Aufweitungen durch einen, sich an den unaufgeweiteten Abschnitt unmittelbar anschließenden zylindrischen Abschnitt und durch einen sich an diesen anschließenden tulpenartig ausgewölbten Abschnitt gekennzeichnet ist. Beide Aufweitungen stoßen im Rahmen der Rohrverbindungen stirnseitig unmittelbar aneinander und es werden die ausgewölbten Abschnitte außenseitig durch eine im Durchmesser verringerbare, schraubenbetätigte Spannschelle umgriffen. Innerhalb der Rohrverbindung erstreckt sich ein Stützrohr, dessen radiale Abmessungen denjenigen der unaufgeweiteten Abschnitte der Rohrenden entsprechen und dessen axiale Erstreckung derart bemessen ist, daß - im montierten Zustand - der Bereich der aufgeweiteten Abschnitte und ein Teil der zylindrischen Abschnitte bezüglich einer radial verlaufenden, die Stirnseiten der Rohrenden aufnehmenden Mittelebene symmetrisch überbrückt ist. Zwischen der Außenseite des Stützrohres und den diesem zugekehrten Innenseiten der Aufweitungen ergibt sich ein Ringraum, in welchem jeweils ein Dichtelement aufgenommen ist, welches mit einer stirnseitig offenen Tasche versehen ist, in welche nach erfolgter Montage beispielsweise ein aushärtungsfähiger Kunststoff eingefüllt wird. Das Dichtelement umgreift im übrigen das, der Mittelebene der Rohrverbindung abgekehrte Ende des Stützrohres und erstreckt sich in dieser Richtung im wesentlichen über die gesamte Länge des zylindrischen Abschnitts der Aufweitungen und ist derart bemessen, daß die Rohrverbindung innenseitig durch einen im wesentlichen glatten Rohrwandungsverlauf gekennzeichnet ist. Ein Formschluß gegenüber einem axialen Ausziehen wird einerseits durch das im Bereich der tulpenartigen Abschnitte ausgewölbte Dichtelement und andererseits durch die, die letztgenannten Abschnitte außenseitig umgreifende Spannschelle gebildet.

Ferner ist aus dem DE-GM 80 33 973.7 eine weitere Rohrverbindung bekannt, bei welcher die miteinander zu verbindenden Rohrenden an beiden Enden muffenartige Aufweitungen aufweisen und bei welcher sich innerhalb des Verbindungsbereichs innerhalb dieser Aufweitungen ein Stützrohr erstreckt. Beide Aufweitungen werden außenseitig durch eine den Zusammenhalt bewirkende Spannschelle übergriffen. Innerhalb des, durch die Aufweitungen außenseitig und das Stützrohr innenseitig umgrenzten Ringraumes, und zwar jeweils an dem, dem Aufweitungsrand und dem diesem gegenüberliegenden axialen Ende befinden sich Dichtelemente, wobei die ersteren stirnseitig aus den Aufweitungen herausragen. Diese herausragenden Enden liegen in axialer Richtung an einem im Querschnitt trapezförmigen Dichtungsring an, der innenseitig an dem Stützrohr und außenseitig an einer mittigen Einformung der Spannschelle anliegt. Die aus den Aufweitungen herausragenden Enden der Dichtringe enden radial außenseitig mit Abstand zu der zugekehrten Innenseite der Spannschelle. Die genannten Aufweitungen der Rohrenden bestehen aus der Hintereinanderanordnung eines zylindrischen Abschnitts und eines gegenüber diesem Abschnitt tulpenartig weiter aufgeweiteten Aufnahmeabschnitts, wobei die Spannschelle lediglich die Aufnahmeabschnitte axial überdeckt. Nachdem die Spannschelle die Aufnahmeabschnitte formschlüssig übergreift, ist diese Rohrverbindung gegenüber einem axialen Auseinanderziehen zuverlässig geschützt.

Es ist die Aufgabe der Erfindung, eine Rohrverbindung der eingangs bezeichneten Art dahingehend auszugestalten, daß bei mechanisch einfachem Aufbau und zuverlässiger Dichtungswirkung die Position der Dichtelemente weiter verbessert, insbesondere stabilisiert wird, wobei insbesondere die Festigkeit gegenüber Querkraftbeanspruchungen verbessert und Achsverlagerungen der Rohrverbindung vermieden werden. Gelöst ist diese Aufgabe bei einer gattungsgemäßen Rohrverbindung durch die Merkmale des Kennzeichnungsteils des Anspruchs 1.

Die, in die Spannschelle eingesteckten Rohrenden und die Spannschelle selbst weisen jeweils zylindrische Abschnitte auf, die mit jeweils einem Rohrende zusammenwirken, so daß über die Spannschelle eine Führungsfunktion auf die zu verbindenden Rohrenden dahingehend ausgeübt wird, daß letztere gleichachsig ausgerichtet und gehalten werden. Gleichzeitig erhöht sich die Festigkeit der Rohrverbindung insbesondere gegenüber Querkraftbeanspruchungen, welche ansonsten Achsverlagerungen, unsymmetrische Verspannungszustände von Dichtelementen und mögliche Undichtigkeiten hervorrufen würden. Die, die muffenartigen Aufweitungen der Rohrenden axial formschlüssig umgreifende Spannschelle bewirkt darüber hinaus in an sich bekannter Weise den axialen Zusammenhalt der Rohrverbindung, d.h. eine formschlüssige Sicherung gegenüber einem Auseinanderziehen. In den Ringraum zwischen den Aufweitungen und dem zentralen Stützrohr einer jeden Rohrverbindung ist wenistens ein ringartiges, im Regelfall aus einem elastomeren Werkstoff bestehendes Dichtelement eingesetzt. Im montierten Zustand dieser Rohrverbindung sind die Stirnseiten der Rohrenden mit Abstand zueinander gehalten, wobei in diesen, durch die Stirnseiten axial und die Spannschelle sowie das Stützrohr radial umgrenzten Ringraum Abschnitte der Dichtelemente hineinragen und innerhalb dieses Ringraumes verspannt angeordnet sind. Die auf Durchmesserverringerung beruhende Wirkung der Spannschelle ist hauptsächlich innerhalb des, durch die muffenartigen Aufweitungen und das Stützrohr radial umgrenzten Ringraumes wirksam und bewirkt hier eine radial innen- und außenseitig wirksame dichtende Anlage der Dichtelemente. Eine Innendruckbeaufschlagung der Rohrverbindung, welche zunächst unmittelbar die, deren Mittelebene abgekehrten axialen Seiten der Dichtelemente betrifft und auf diese einen axialen Schub ausübt, bewirkt somit eine Verstärkung der Verspannung der stirnseitig aus den Aufweitungen herausragenden Abschnitte der Dichtelemente und damit eine Verstärkung deren Dichtwirkung. Aufgrund der Verspannung ist die mögliche Verdrängung der Dichtelemente unter Innendruckbeaufschlagung in jedem Fall beschränkt, so daß ein Austreiben der Dichtelemente aus den muffenartigen Aufweitungen in jedem Fall zuverlässig unterbunden ist.

Die Merkmale des Anspruchs 2 sind auf die Ausgestaltung einer Rohrverbindung zwischen zwei Rohrenden gerichtet, die hinsichtlich der Gestaltung ihrer muffenartigen Aufweitungen an sich bekannt sind. Wesentlich ist hiernach, daß die zylindrischen Abschnitte der Aufweitung mit entsprechenden zylindrischen Abschnitten der Spannschelle unmittelbar zusammenwirken, so daß sich die oben dargelegte stabilisierende, insbesondere führende Funktion der Spannschelle ergibt. Die Aufnahmeabschnitte der muffenartigen Aufweitungen können grundsätzlich beliebig gestaltet sein, soweit deren radiale Abmessungen - in einem Axialschnitt gesehen - an beiden Enden im wesentlichen gleich bemessen sind, so daß in Verbindung mit einem entsprechend ausgebildeten Gegenprofil der Dichtelemente im Verspannungszustand eine möglichst gleichförmige Kraftübertragung auf das Dichtelement möglich ist. Auch wird durch diese Gestaltung ein Formschluß zwischen dem Dichtelement und dem Aufnahmeabschnitt bereitgestellt und dazu beigetragen, daß im Fall einer Innendruckbeaufschlagung der Rohrverbindung ein Austreiben der Dichtelemente aus diesem Aufnahmeabschnitt heraus verhindert wird. Die zylindrischen Abschnitte der Spannschelle können einen Teil der zylindrischen Abschnitte der muffenartigen Aufweitung überdecken, diese können jedoch auch zur Gänze überdecken und zu der oben dargelegten Führungsfunktion der Spannschelle beitragen.

Die Dichtelemente können sich innerhalb der muffenartigen Aufweitungen entsprechend den Merkmalen des Anspruchs 3 beispielsweise lediglich innerhalb des Aufnahmeabschnitts erstrecken. Sie können jedoch auch den gesamten Ringraum ausfüllen, der durch die muffenartigen Aufweitungen einerseits und das Stützrohr andererseits umgrenzt wird. Das Stützrohr hat eine Länge, die im montierten Zustand der Rohrverbindung deren Mittel- oder Trennebene überbrückt und sich im übrigen über die gesamte Länge beider muffenartigen Aufweitungen erstreckt. Erreicht wird auf diese Weise, daß der Innenwandungsverlauf der Rohrverbindung im wesentlichen glattwandig ausfällt, womit der Bildung von Ablagerungen entgegengewirkt wird, die hygienisch bedenktlich sind und darüber hinaus geeignet sind, Strömungsgeräusche zu verursachen. Die Spannschelle besteht aus einem mittleren zylindrischen Abschnitt, der zum Überdecken beider Aufnahmeabschnitte bestimmt ist und zylindrischen Abschnitten, die sich an den erstgenannten beidseitig unter Zwischenanordnung von Übergangsabschnitten anschließen. Die Obergangsabschnitte sind geometrisch an die zugekehrten Seiten bzw. Oberflächen der Aufnahmeabschnitte angepaßt und ermöglichen neben einer gleichförmigen radialen Druckübertragung auch die Realisierung einer axialen Fixierung der Rohrenden aneinander.

Die Merkmale des Anspruchs 4 sind auf eine spezielle Art der Verspannung der aus den Aufnahmeabschnitten stirnseitig herausragenden Abschnitte der Dichtelemente gerichtet. Es ist hiernach in dem Raum zwischen den Stirnseiten der muffenartigen Aufweitungen ein Stützring angeordnet, der axial beidseitig gleich beschaffene Anlageflächen für die genannten Abschnitte der Dichtelemente bildet und deren Verformbarkeit, insbesondere Verdrängbarkeit bei Innendruckbeaufschlagung der Rohrverbindung weiter begrenzt. Der Stützring erfüllt jedoch noch weitere Funktionen. Aufgrund dessen Anliegens auf der Außenseite des Stützrohres einerseits und der Innenseite der Spannschelle andererseits wirkt er als Abstandhalter, der im Falle eines Anspannens der Spannschelle die Spannbewegung, d.h. das Ausmaß der Durchmesserverminderung begrenzt. Auf diese Weise wird gleichzeitig die maximal mögliche Verspannung der Dichtelemente konstruktiv festgelegt, so daß auch auf diesem Wege dazu beigetragen wird, ein Austreiben der Dichtelemente aus den Aufnahmeabschnitten heraus zu verhindern. Die gesamte Rohrverbindung ist in jedem Fall bezüglich einer Mittelebene symmetrisch ausgebildet, wobei - in einem Längsschnitt gesehen - diese Mittelebene zugleich Mittelebene der Querschnittsgestalt des Stützringes ist, der beispielsweise durch eine Trapezform gebildet werden kann, deren relativ größere Grundseite radial an der Innenseite der Spannschelle anliegt. Um in bestimmten Fällen eine gewisse radiale Elastizität des Stützringes bereitzustellen, kann dieser mit einem durchgehenden Längsspalt versehen sein.

Die metallische Ausbildung der Komponenten der erfindungsgemäßen Rohrverbindung entsprechend den Merkmalen des Anspruchs 5 ist die praktisch zweckmäßigste, wobei sämtliche dieser Komponenten aus Gründen des Korrosionsschutzes aus dem gleichen Metall bestehen.

Die Merkmale des Anspruchs 6 sind auf eine Alternative insoweit gerichtet, als hierbei auf die Anordnung eines zentralen Stützringes verzichtet wird und die aus den Stirnseiten der Aufnahmeabschnitte herausragenden Abschnitte der Dichtelemente unmittelbar aneinanderliegen. Letztgenannte Abschnitte sind derart bemessen, daß diese den Ringraum zwischen der Innenseite der Spannschelle einerseits und der Außenseite des Stützrohres andererseits weitestgehend ausfüllen, so daß auf konstruktivem Wege eine Verdrängungsmöglichkeit dieser Abschnitte - sei es als Folge eines Anspannens der Spannschelle oder auch als Folge einer Innendruckbeaufschlagung der Rohrverbindung - begrenzt ist.

Es ergibt sich insgesamt in jedem Fall eine steckbare Rohrverbindung, deren Dichtelemente in erhöhtem Ausmaß gegenüber einem Verdrängen aus den zugeordneten Aufnahmeabschnitten der muffenartigen Aufweitungen gesichert sind und die gleichzeitig montagemäßig einfach handhabbar ist.

Die Erfindung wird im folgenden unter Bezugnahme auf die in den Zeichnungen schematisch dargestellten Ausführungsbeispiele näher erläutert werden. Es zeigen:
Fig. 1 eine Darstellung einer Rohrverbindung in teilweisem Axialschnitt entsprechend den Schnittebenen I-I der Fig. 2;
Fig. 2 eine Ansicht einer Rohrverbindung entsprechend der Schnittebene II-II der Fig. 1;
Fig. 3 eine Darstellung eines teilweisen Axialschnitts einer Rohrverbindung entsprechend den Schnittebenen III-III der Fig. 4;
Fig. 4 eine Ansicht einer Rohrverbindung entsprechend einer Schnittebene IV-IV der Fig. 3.

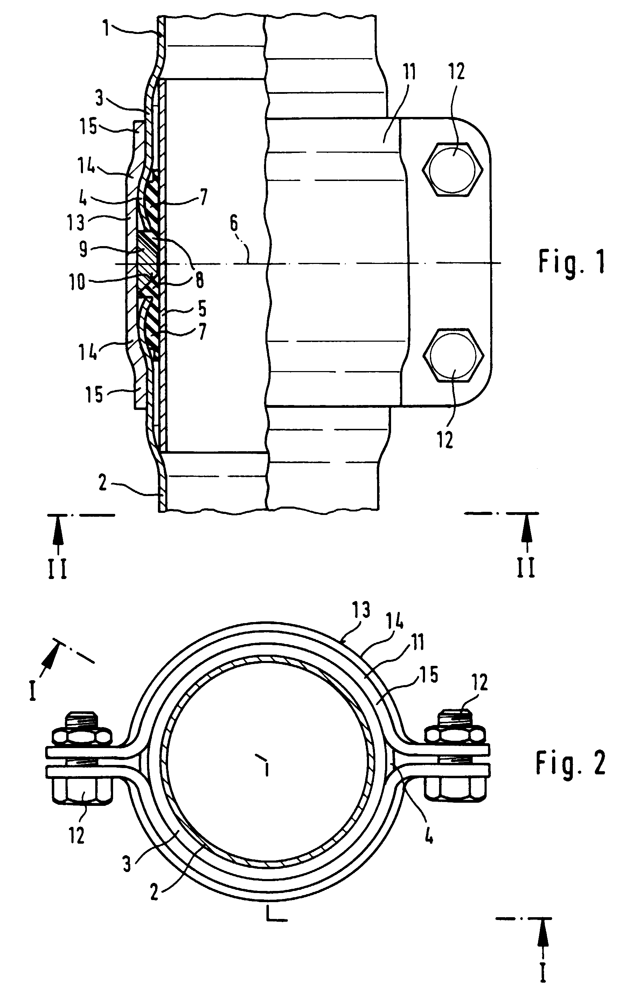

Mit 1, 2 sind in den Fig. 1 und 2 die Enden zweier, stirnseitig einander gegenüberstehender, erfindungsgemäß zu verbindender Rohrenden bezeichnet. Es handelt sich bei diesen Rohren im Regelfall um metallische Rohre, beispielsweise aus Edelstahl, Kupfer oder dergleichen - es kann sich grundsätzlich jedoch auch im Kunststoffrohre handeln.

Beide Rohrenden 1, 2 sind an ihren, einander gegenüberstehenden Enden in gleicher Weise muffenartig aufgeweitet. Jede dieser Aufweitungen besteht - ausgehend von dem unaufgeweiteten Teil - aus einem zylindrischen Abschnitt 3 und einem, sich in Richtung auf das stirnseitige Ende des jeweiligen Rohrendes 1, 2 anschließenden, gegenüber dem erstgenannten Abschnitt 3 weiter aufgeweiteten, tulpenartig gestalteten Aufnahmeabschnitt 4. Wesentlich ist, daß das stirnseitige Ende des Aufnahmeabschnitts 4 radiale Abmessungen aufweist, die im wesentlichen denjenigen des zylindrischen Abschnitts 3 entsprechen. Es kann der Aufnahmeabschnitt 4 naturgemäß durch einen solchen Abschnitt ersetzt werden, der endseitig durch konische oder in sonstiger Weise sich verjüngende Abschnitte und einen mittleren zylindrischen Abschnitt gekennzeichnet ist.

Mit 5 ist ein Stützrohr bezeichnet, dessen radiale Abmessungen mit denjenigen der Rohrenden 1, 2 in deren jeweils unaufgeweiteten Abschnitten übereinstimmen. Im montierten Zustand der Rohrenden 1, 2 erstreckt sich dieses Stützrohr 5 symmetrisch beiderseits einer radial verlaufenden Mittelebene 6. Es ist längenmäßig derart bemessen, daß es bis an die Übergangsbereiche zwischen den zylindrischen Abschnitten 3 und den unaufgeweiteten Abschnitten der Rohrenden 1, 2 heranreicht, so daß im Verbindungsbereich der Rohrenden ein innenseitig im wesentlichen glatter Rohrwandungsverlauf erreicht wird, womit gleichzeitig der Bildung von Ablagerungen und damit hygienischen Risiken entgegengewirkt wird. Das Stützrohr 5 besteht im Regelfall aus einem, den Rohrenden 1, 2 entsprechenden Werkstoff.

Mit 6, 7 sind zwei, untereinander gleich beschaffene ringartige Dichtelemente bezeichnet, die vorzugsweise aus einem elastomeren Werkstoff bestehen. Jedes Dichtelement 6, 7 weist innenseitig eine zylindrische, zur Anlage an der Außenseite des Stützrohres 5 bestimmte erste Dichtfläche auf. Jedes Dichtelement 6, 7 weist darüber hinaus einen radial ausgewölbten, hinsichtlich seiner Konturen an die Innenabmessungen des Aufnahmeabschnitts 4 angepaßten Abschnitt auf, dessen Oberfläche eine zweite Dichtfläche bildet. Schließlich weist jedes Dichtelement 6, 7 auch einen, um die Stirnseiten herumgreifenden, sich axial in Richtung auf das jeweils andere Rohrende 1, 2 hin erstreckenden Abschnitt 8 auf, der mit einem, im Querschnitt trapezartig ausgestalteten, bezüglich der Mittelebene 6 symmetrisch angeordneten Stützring 9 zusammenwirkt. Der Stützring 9 besteht vorzugsweise aus einem Metall, welches demjenigen der Rohrenden 1, 2 sowie des Stützrohres 5 entspricht.

Der Stützring 9 weist radial außen- und innenseitige zylindrische Flächen auf, deren letztere unmittelbar an dem Stützrohr 5 anliegen. Zur Erzielung einer gewissen radialen Elastizität kann der Stützring 9 mit einem zeichnerisch nicht dargestellten Längsspalt versehen sein.

Wesensmerkmal des Stützringes 9 sind darüber hinaus ausgehend von seiner zylindrischen Außenseite schräg einwärts in Richtung auf die Mittelebene 6 hin verlaufende Seitenflächen 10, die zu den entsprechenden Gegenflächen der Abschnitte 8 der Dichtelemente 7 komplementär ausgestaltet sind und unmittelbare Anlageflächen bilden. Man erkennt, daß diese, symmetrisch bezüglich der Mittelebene 6 verlaufenden Seitenflächen 10 unmittelbare Stützflächen für die Dichtelemente 7 bilden, welche bei Innendruckbeaufschlagung der Rohrenden 1, 2 Verdrängungsbewegungen der Dichtelemente begrenzen und insbesondere ein Austreiben der Dichtelemente 7 aus dem Zwischenraum zwischen den Innenseiten der Aufnahmeabschnitte 4 und den Außenseiten des Stützrohres 5 zuverlässig verhindern.

Die Dichtelemente 7 haben in dem gezeigten Ausführungsbeispiel axiale Abmessungen, die sich im wesentlichen lediglich innerhalb des tulpenförmigen Aufnahmeabschnitts 4 erstrecken. Es ist gleichermaßen denkbar, diese Dichtelemente 7 axial derart auszulegen, daß diese zusätzlich auch den Ringraum zwischen dem zylindrischen Abschnitt 3 und dem Stützrohr 5 ausfüllen.

Mit 11 ist eine, aus zwei Halbschalen zusammengesetzte, im Innendurchmesser verringerbare Spannschelle bezeichnet, die über Schrauben 12 spannbar ist. Jede der untereinander gleich ausgebildeten Halbschalen der Spannschelle 11 besteht aus einem mittleren, zylindrischen Abschnitt 13, der im montierten Zustand sich in etwa bis zu den Gipfelpunkten der tulpenartigen Aufnahmeabschnitte 4 erstreckt. An diesen zylindrischen Abschnitt 13 schließen sich beidseitig Übergangsabschnitte 14 an, die hinsichtlich ihrer Innenkonturen an die Außenkonturen der genannten Aufnahmeabschnitte 4 angepaßt sind, wobei sich an diese Übergangsabschnitte 14 wiederum zylindrische Abschnitte 15 anschließen, welche zum unmittelbaren Anliegen auf der Außenseite der zylindrischen Abschnitte 3 der Rohrenden 1, 2 bestimmt sind. Letztgenannte Abschnitte erstrecken sich in dem gezeigten Ausführungsbeispiel etwa über eine Länge, die 50% der Länge der zylindrischen Abschnitte 3 entspricht. Es können die Abschnitte 15 hingegen auch derart bemessen sein, daß ein größerer Teil - oder auch ein kleinerer Teil - der zylindrischen Abschnitte 3 überdeckt wird. Zur Erzielung einer guten Führungsfunktion sowie zur mechanischen Stabilisierung sollte eine möglichst großflächige Überdeckung dieser zylindrischen Abschnitte gegeben sein.

Die zylindrische Außenfläche des Stützringes 9 liegt in jedem Fall an der zylindrischen Innenseite des Abschnitts 13 an, so daß eine Wirkung des Stützringes 9 darin besteht, daß dieser die Funktion eines Distanzringes zwischen dem Stützrohr 5 und der Spannschelle 11 übernimmt. Eine weitere Wirkung dieses Stützringes 9 besteht darin, daß ein Austreiben des Dichtelementes 7 aus der, durch den tulpenartigen Aufnahmeabschnitt 4 gebildeten Kammer bei innerer Druckbeaufschlagung der Rohrenden 1, 2 zuverlässig verhindert wird. Schließlich besteht eine weitere Wirkung dieses, vorzugsweise aus Metall bestehenden Stützringes 9 darin, daß auch im Brandfall die mechanische Festigkeit und insbesondere der Zusammenhalt der Rohrverbindung gesichert bleibt.

Eine weitere Wirkung des Stützringes 9 besteht darin, daß dieser ein Widerlager für die bei Anspannung der Spannschelle auftretenden Axialkräfte bildet.

Man erkennt, daß die zylindrischen Abschnitte 15 der Spannschelle 11 beiderseits der Mittelebene 6 in Verbindung mit den diesen zugekehrten zylindrischen Abschnitten 3 der Rohrenden eine Führungsfunktion ausüben und insbesondere einer Verkantung bzw. Fluchtungsfehlern der Rohrenden entgegenwirken, welche unsymmetrische Verformungszustände der Dichtelemente und unter Umständen Undichtigkeiten mit sich bringen können. Gleichzeitig wird auf diesem Wege auch die mechanische Festigkeit der Rohrverbindung erhöht, insbesondere gegenüber einer Biegebeanspruchung.

Auf diese Weise lassen sich beispielsweise bei Nennweiten der Rohrenden von 100 mm Druckfestigkeiten bis zu 50 bar erreichen.

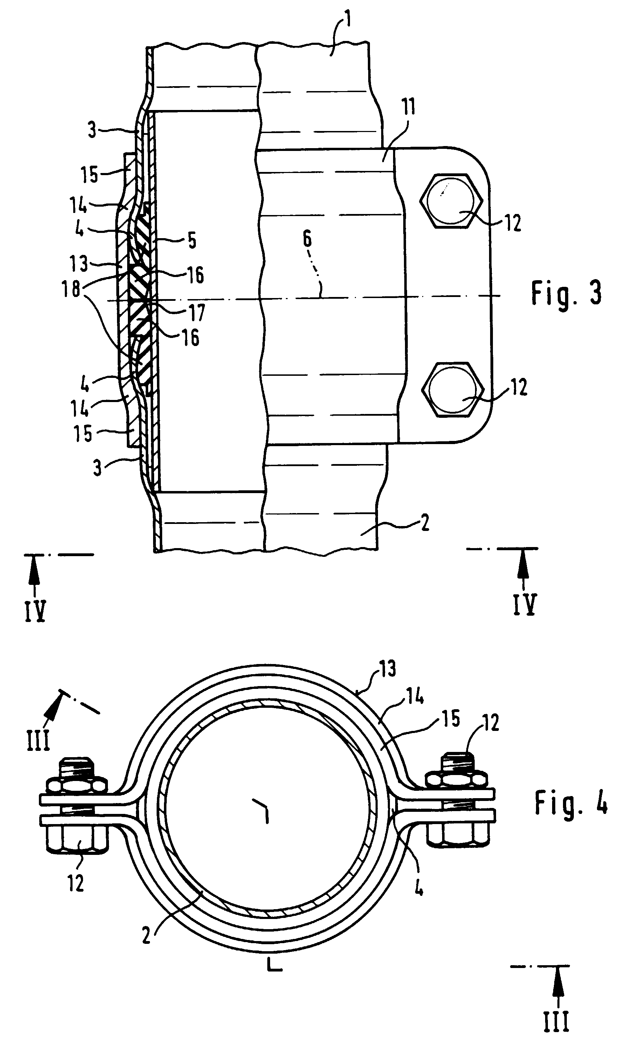

Bei dem, in den Fig. 3 und 4 gezeigten Ausführungsbeispiel sind Funktionselemente, die mit denjenigen der Fig. 1 und 2 übereinstimmen, entsprechend beziffert, so daß auf eine diesbezügliche wiederholte Beschreibung verzichtet werden kann.

Wesentlicher Unterschied des Ausführungsbeispiels der Fig. 3 und 4 gegenüber den erstgenannten ist die Ausbildung der Dichtelemente 15. Diese sind wiederum ringartig ausgebildet und bestehen aus einem elastomeren Werkstoff - sie unterscheiden sich von den Dichtelementen 7 darin, daß sie jeweils mit Abschnitten 16 versehen sind, die das stirnseitige Ende der muffenartigen Aufnahmeabschnitte 4 radial umgreifen und in der Mittelebene 6 stumpf aneinanderliegen. Die Abschnitte 16 können zylindrisch ausgebildet sein und liegen radial außenseitig an der Innenseite der Spannschelle 11 und radial innenseitig an der Außenseite des Stützrohres 5 an. Zur Erzielung einer erhöhten axialen Elastizität kann jedoch jedes Ansatzteil 16 an seinem stirnseitigen Ende mit einer Ausnehmung 17 versehen sein, welche Ausnehmungen 17 sich in dem gezeigten Ausführungsbeispiel geometrisch zu einem spitzwinkligen Dreieck komplettieren und im Falle einer Innendruckbeaufschlagung der Rohrenden 1, 2 als Aufnahmevolumen für verdrängte Dichtelementmasse zur Verfügung stehen.

Man erkennt, daß auch bei dem Ausführungsbeispiel gemäß den Fig. 3 und 4 im Falle einer Innendruckbeaufschlagung ein Austreiben der Dichtelemente ebenfalls zuverlässig verhindert wird. Auch werden sonstige Eigenschaften des Ausführungsbeispiels gemäß den Fig. 1 und 2 weitgehend erreicht.

Man erkennt ferner, daß bei beiden Ausführungsbeispielen aufgrund des formschlüssigen Umgreifens der Rohrenden, insbesondere deren tulpenartiger Aufnahmeabschnitte 4 eine ebenfalls zuverlässige axiale Auszugssicherung gegeben ist.

## Patentansprüche

1. Rohrverbindung zwischen zwei Rohrenden (1,2), die an ihren zu verbindenden Enden muffenartige Aufweitungen aufweisen,
- mit einer, zum axial formschlüssigen Umgreifen beider Aufweitungen bestimmten, im Durchmesser verringerbaren, unter anderem den Zusammenhalt der Rohrenden (1,2) bewirkenden Spannschelle (11),
- einem, sich innerhalb der Aufweitungen erstreckenden, letztere überbrückenden Stützrohr (5) und
- Dichtelementen (7), die in den Ringraum zwischen dem Stützrohr (5) und den Aufweitungen eingesetzt sind,
- wobei die Stirnseiten der Rohrenden (1,2) mit Abstand zueinander gehalten sind,
- wobei die Dichtelemente (7) jeweils einen Abschnitt (8,16) aufweisen, der aus den Stirnseiten der Rohrenden herausragt und
- wobei die Abschnitte (8,16) in dem, durch das Stützrohr (5) und die Spannschelle (11) radial umgrenzten Ringraum verspannt angeordnet sind,
- dadurch gekennzeichnet,
- daß die Spannschelle (11) zylindrische Abschnitte (15) aufweist, die an zylindrischen Abschnitten (3) der Rohrenden (1,2) anliegen, und
- daß die Abschnitte (8,16) der Dichtelemente (7) wenigstens teilweise radiale Abmessungen aufweisen, die den Abmessungen des Ringraumes zwischen dem Stützrohr (5) und der Spannschelle (11) entsprechen.

2. Rohrverbindung nach Anspruch 1,
dadurch gekennzeichnet,
- daß jede Aufweitung eines Rohrendes (1,2) in an sich bekannter Weise ausgehend von dessen unaufgeweitetem Bereich aus der Hintereinanderandordnung eines zylindrischen Abschnitts (3) und eines, gegenüber diesem zylindrischen Abschnitt (3) weiter aufgeweiteten Aufnahmeabschnitts (4) besteht,
- wobei die radialen Abmessungen des Aufnahmeabschnitts (4) in der Ebene der Stirnseite des Rohrendes (1,2) denjenigen des zylindrischen Abschnitts (3) im wesentlichen entsprechen und
- daß die Spannschelle (11) zumindest an den, einer radialen Mittelebene (6) zugekehrten Enden der Aufnahmeabschnitte (4) und an wenigstens einem Teil der zylindrischen Abschnitte (3) anliegt.

3. Rohrverbindung nach Anspruch 1 oder 2,
- dadurch gekennzeichnet,
- daß der, durch die muffenartigen Aufweitungen und das Stützrohr (5) radial umgrenzte Ringraum durch das jeweilige Dichtelement (7) wenigstens teilweise ausgefüllt ist,
- daß sich das Stützrohr (5) ausgehend von dem Anfang der Aufweitung des einen Rohrendes (1) - die Mittelebene (6) durchdringend - durchgehend bis zum Anfang der Aufweitung des anderen Rohrendes (2) erstreckt und
- daß die Spannschelle (14) einen mittleren, zylindrischen Abschnitt (13) aufweist, der beidseitig - unter Zwischenanordnung von Übergangsabschnitten (14) - in zylindrischen, an den jeweiligen Rohrenden (1,2) anliegenden Abschnitten (15) kleineren Radius fortgeführt ist.

4. Rohrverbindung nach einem der vorangegangenen Ansprüche 1 bis 3,
- dadurch gekennzeichnet,
- daß in den, axial durch die Stirnseiten der Rohrenden (1,2) radial, durch das Stützrohr (5) sowie die Spannschelle (11) umgrenzten Ringraum ein Stützring (9) eingesetzt ist,
- daß der Stützring (9) an der Innenseite der Spannschelle (11) und der Außenseite des Stützrohres (5) anliegt,
- daß der Stützring (9) beidseitig axial orientierte, geometrisch an die zugekehrten Seiten der Abschnitte (8,16) der Dichtelemente (7) angepaßte Anlageflächen aufweist,
- daß der Stützring (9) eine im Querschnitt trapezförmige Gestalt aufweist, deren relativ größere Grundseite an der Innenseite der Spannschelle (11) anliegt und
- daß die Abschnitte (8,16) der Dichtelemente (7) wenigstens teilweise radiale Abmessungen haben, die den Abmessungen des Ringraumes zwischen dem Stützrohr (5) und der Spannschelle (11) entsprechen.

5. Rohrverbindung nach Anspruch 4,
dadurch gekennzeichnet,
daß die Rohrenden (1,2), das Stützrohr (5), die Spannschelle (11) und der Stützring (9) aus dem gleichen metallischen Werkstoff, z.B. Stahl, Aluminium oder Kupfer bestehen.

6. Rohrverbindung nach einem der vorangegangenen Ansprüche 1 bis 5,
dadurch gekennzeichnet,
- daß die Abschnitte (8,16) stirnseitig über einander angepaßte Anlageflächen unmittelbar aneinanderliegen.

## Claims

1. Pipe connection between two pipe ends (1, 2) which comprise on their ends to be connected sleeve-like portions of increased diameter,
- having a clamping ring (11) which is intended for the purpose of encompassing the two portions of increased diameter in a form locking manner axially, can be reduced in diameter and amongst other things serves to hold the pipe ends (1, 2) together,
- having a supporting pipe (5) which extends within the portions of increased diameter and bridges over the latter said portions and
- having sealing elements (7) which are inserted into the annular space between the supporting pipe (5) and the portions of increased diameter,
- wherein the end faces of the pipe ends (1, 2) are held at a spaced interval with respect to each other,
- wherein the sealing elements (7) each comprise a portion (8, 16) which protrudes out of the end faces of the pipe ends and
- wherein the portions (8, 16) are disposed in a clamped manner in the annular space which is defined radially by virtue of the supporting pipe (5) and the clamping ring (11),
- characterised in that
- the clamping ring (11) comprises cylindrical portions (15) which lie on cylindrical portions (3) of the pipe ends (1, 2), and
- the portions (8, 16) of the sealing elements (7) comprise at least partially radial dimensions which correspond to the dimensions of the annular space between the supporting pipe (5) and the clamping ring (11).

2. Pipe connection according to claim 1,
characterised in that
- each portion of increased diameter of a pipe end (1, 2) consists in a manner known per se starting from its region of constant diameter of the series arrangement of a cylindrical portion (3) and of a receiving portion (4) which is further increased in diameter with respect to this cylindrical portion (3),
- wherein the radial dimensions of the receiving portion (4) in the plane of the end face of the pipe end (1, 2) correspond substantially to those of the cylindrical portion (3) and
- the clamping ring (11) lies at least on the ends of the receiving portion (4) facing a radial middle plane (6) and lies at least on a part of the cylindrical portions (3).

3. Pipe connection according to claim 1 or 2,
- characterised in that
- the annular space, which is defined in a radial manner by virtue of the sleeve-like portions of increased diameter and the supporting pipe (5), is at least partially filled by the respective sealing element (7),
- the supporting pipe (5) extends starting from the commencement of the portion of increased diameter of the one pipe end (1) - penetrating the middle plane (6) - in a continuous manner to the commencement of the portion of increased diameter of the other pipe end (2) and
- the clamping ring (14) comprises a middle, cylindrical portion (13) which is continued on both sides - by interpositioning transition portions (14) - in cylindrical portions (15) of a smaller radius which lie on the respective pipe ends (1, 2).

4. Pipe connection according to any one of the preceding claims I to 3,
- characterised in that
- a supporting ring (9) is inserted into the annular space which is defined in an axial manner by the end faces of the pipe ends (1, 2) and in a radial manner by the supporting pipe (5) and the clamping ring (11),
- the supporting ring (9) lies on the inner side of the clamping ring (11) and on the outer side of the supporting pipe (5),
- the supporting ring (9) comprises bearing surfaces which are oriented on both sides in an axial manner and tailored geometrically to suit the facing sides of the portions (8, 16) of the sealing elements (7),
- the supporting ring (9) comprises a form which is trapezium-shaped in cross section and whose relatively larger base side lies on the inner side of the clamping ring (11) and
- the portions (8, 16) of the sealing elements (7) have at least partially radial dimensions which correspond to the dimensions of the annular space between the supporting pipe (5) and the clamping ring (11).

5. Pipe connection according to claim 4, characterised in that the pipe ends (1, 2), the supporting pipe (5), the clamping ring (11) and the supporting ring (9) consist of the same metallic material, for example steel, aluminium or copper.

6. Pipe connection according to any one of the preceding claims 1 to 5, characterised in that
- the portions (8, 16) lie directly against to each other at the end face side by way of bearing surfaces which are adapted to each other.

## Revendications

1. Raccord pour tuyaux entre deux bouts (1,2) de tuyaux, qui comprennent des parties élargies en forme de manchons à leurs extrémités devant être réunies, comportant
- un collier de serrage (11) destiné à enserrer axialement, selon une liaison par complémentarité de formes, autour des deux parties élargies et qui notamment maintient à l'état assemblé les extrémités (1,2) des tuyaux et dont le diamètre peut être réduit,
- un tube d'appui (5) qui s'étend à l'intérieur des parties élargies et réalise un pontage de ces dernières, et
- des éléments d'étanchéité (7), qui sont insérés dans l'espace annulaire présent entre le tube d'appui (5) et les parties élargies,
- les faces frontales des extrémités (1,2) des tuyaux étant maintenues à distance l'une de l'autre,
- les éléments d'étanchéité (7) présentant respectivement une partie (8,16) qui fait saillie hors des faces frontales des extrémités des tuyaux, et
- les parties (8,16) étant disposées en étant serrées dans l'espace annulaire entouré radialement par le tube d'appui (5) et le collier de serrage (11),
- caractérisé en ce
- que le collier de serrage (11) comporte des parties cylindriques (15) qui s'appliquent sur des parties cylindriques (3) des extrémités (1,2) des tuyaux, et
- que les parties (8,16) des éléments d'étanchéité (7) comportent au moins en partie des dimensions radiales, qui correspondent aux dimensions de l'espace annulaire situé entre le tube d'appui (5) et le collier de serrage (11).

2. Raccord pour tuyaux selon la revendication 1, caractérisé en ce
- que chaque partie élargie d'une extrémité de tuyau (1,2) est constituée de façon connue en soi, à partir de sa partie non élargie, par une succession d'une partie cylindrique (3) et d'une partie de logement (4) élargie de façon supplémentaire par rapport à cette partie cylindrique (3),
- les dimensions radiales de la partie de logement (4) dans le plan de la face frontale de l'extrémité (1,2) du tuyau correspondant essentiellement à celles de la partie cylindrique (3), et
- que le collier de serrage (11) s'applique au moins contre les extrémités, tournées vers un plan médian radial (6), des parties de logement (4) et sur au moins une portion de la partie cylindrique (3).

3. Raccord pour tuyaux selon la revendication 1 ou 2,
- caractérisé en ce
- que l'espace annulaire, entouré radialement par les parties élargies en forme de manchons et par le tube d'appui (5), est rempli au moins partiellement par l'élément d'étanchéité respectif (7),
- que le tube d'appui (5) s'étend continûment depuis le début de la partie élargie d'une extrémité de tuyau (1) - en traversant le plan médian (6) - jusqu'au début de la partie élargie de l'autre extrémité de tuyau (2), et
- que le collier de serrage (14) comprend une partie cylindrique centrale (13) qui se prolonge des deux côtés - moyennant la présence de parties intercalaires de jonction (14) - par des parties cylindriques (15) de rayon inférieur s'appliquant contre les extrémités respectives (1,2) des tuyaux.

4. Raccord pour tuyaux selon l'une des revendications précédentes 1 à 3,
- caractérisé en ce
- qu'une bague d'appui (9) est insérée dans l'espace annulaire entouré axialement par les faces frontales des extrémités (1,2) du tuyau et radialement par le tube d'appui (5) ainsi que par le collier de serrage (11),
- que la bague d'appui (9) s'applique contre la face intérieure du collier de serrage (11) et contre la face extérieure du tube d'appui (5),
- que la bague d'appui (9) comprend, des deux côtés, des surfaces d'application orientées axialement et dont la géométrie est adaptée à celle des faces, tournées l'une vers l'autre, des parties (8,16) des éléments d'étanchéité (7),
- que la bague d'appui (9) comprend une configuration de forme trapézoïdale en coupe transversale, dont le côté relativement plus long s'applique contre la face intérieure du collier de serrage (11), et
- que les parties (8,16) des éléments d'étanchéité (7) ont au moins partiellement des dimensions radiales qui correspondent aux dimensions de l'espace annulaire présent entre le tube d'appui (5) et le collier de serrage (11).

5. Raccord pour tuyaux selon la revendication 4,
caractérisé en ce
- que les extrémités (1,2) des tuyaux, le tube d'appui (5), le collier de serrage (11) et la bague d'appui (9) sont réalisés dans le même matériau métallique, par exemple de l'acier, de l'aluminium ou du cuivre.

6. Raccord pour tuyaux selon l'une des revendications précédentes 1 à 5,
caractérisé en ce
- que les parties (8,16) s'appliquent directement frontalement l'une contre l'autre, au moyen de surfaces d'application adaptées entre elles.
